# EUROPEAN PATENT APPLICATION

(11) **EP 4 542 720 A2**
(43) Date of publication of application: **23.04.2025**
(21) Application number: 24184183.2
(22) Date of filing: 25.06.2024
(51) Int. Cl.: H01M 10/42, H01M 10/0587, H01M 50/107

(54) **DEFORMATION ANALYSIS DEVICE FOR SECONDARY BATTERY AND METHOD THEREOF**

(30) Priority: 13.10.2023 KR 20230136716
(71) Applicant: SAMSUNG SDI CO., LTD., Giheung-gu Yongin-si, Gyeonggi-do 17084 (KR); UNIST (Ulsan National Institute of Science and Technology), Ulsan 44919 (KR)
(72) Inventor: WOO, Seong Ho, 17084 Yongin-si (KR); KIM, Dae Sik, 17084 Yongin-si (KR); LEE, Sung Kook, 17084 Yongin-si (KR); KIM, Ji Young, 17084 Yongin-si (KR); LEE, Bo Ram, 17084 Yongin-si (KR); LEE, Hyun-Wook, 44919 Ulsan (KR); PARK, Changhyun, 44919 Ulsan (KR); JUNG, Ukhyun, 44919 Ulsan (KR)
(74) Representative: Marks & Clerk LLP

(57) **Abstract**

A method for analyzing deformation of a secondary battery having an electrode assembly received in a case, the method including obtaining a first image by performing computed tomography (CT) imaging on the secondary battery, calculating a first summation value of long and short diameters of the case from the first image, obtaining multiple charge and discharge cycles of the secondary battery after charging and discharging the secondary battery multiple times so that the secondary battery deteriorates, obtaining a second image by performing CT imaging on the deteriorated secondary battery, calculating a second summation value of the long and short diameters of the case from the second image and determining that the electrode assembly is deformed if a value obtained by subtracting the first summation value from the second summation value is greater than a reference value.

## Description

### BACKGROUND

### 1. Field

The present disclosure relates to a deformation analysis device and method for a secondary battery.

### 2. Description of the Related Art

Secondary batteries are subjected to continuous charging and discharging, which causes various electrochemical reactions within the batteries, resulting in battery degradation and performance degradation. In particular, the internal deformation of a battery during charging and discharging is a major factor affecting degradation and performance degradation. In order to analyze a deterioration phenomenon, a destructive analysis method, which generally involves disassembling the battery and conducting the analysis, was mainly used. However, such analysis methods inevitably cause damage to the inside of a battery during a disassembling process, making it difficult to determine the actual cause of performance deterioration, and are limited in identifying the deterioration tendency as charging and discharging progresses.

The above information disclosed in this Background section is only for enhancement of understanding of the background of the disclosure.

### SUMMARY

Embodiments include a method for analyzing deformation of a secondary battery having an electrode assembly received in a case. The deformation analysis method includes obtaining a first image by performing computed tomography (CT) imaging on the secondary battery, calculating a first summation value of long and short diameters of the case from the first image, obtaining a number of charge and discharge cycles of the secondary battery after charging and discharging the secondary battery multiple times so that the secondary battery deteriorates, obtaining a second image by performing CT imaging on the deteriorated secondary battery, calculating a second summation value of the long and short diameters of the case from the second image and determining that the electrode assembly is deformed if a value obtained by subtracting the first summation value from the second summation value is greater than a reference value.

Obtaining the first image may further include obtaining a first region image corresponding to a first region and a second region image corresponding to a second region by performing CT imaging on each of the first and second regions of the secondary battery, calculating a long diameter of the first region of the case from the first region image, calculating a long diameter of the second region of the case from the second region image and determining that the electrode assembly is deformed if an absolute value obtained by subtracting the long diameter of the first region from the long diameter of the second region is greater than a reference value.

Obtaining the second image may further include obtaining a first region image corresponding to a first region and a second region image corresponding to a second region by performing CT imaging on each of the first and second regions of the secondary battery, calculating a long diameter of the first region of the case from the first region image, calculating a long diameter of the second region of the case from the second region image and determining that the electrode assembly is deformed if an absolute value obtained by subtracting the long diameter of the first region from the long diameter of the second region is greater than a reference value.

The case may have a cylindrical shape.

The electrode assembly may be wound in a cylindrical shape in which a positive electrode plate, a separator and a negative electrode plate are stacked.

The first and second regions may be spaced apart from each other perpendicular to a winding axis of the electrode assembly.

Embodiments include a method for analyzing deformation of a secondary battery having an electrode assembly received in a case. The method includes obtaining a first region image corresponding to a first region and a second region image corresponding to a second region by performing computed tomography (CT) imaging on the first region and the second region of the secondary battery, respectively, calculating a long diameter of the first region of the case from the first region image, calculating a long diameter of the second region of the case from the second region image and determining that the electrode assembly is deformed if an absolute value obtained by subtracting the long diameter of the first region from the long diameter of the second region is greater than a reference value.

The method may further include calculating a first summation value of the long and short diameters of the case from the first region image, obtaining a number of charge and discharge cycles of the secondary battery after charging and discharging the secondary battery multiple times so that the secondary battery deteriorates, obtaining a second image of the first region by performing CT imaging on the secondary battery, calculating a second summation value of the long and short diameters of the case from the second image of the first region and determining that the electrode assembly is deformed if a value obtained by subtracting the first summation value from the second summation value is greater than a reference value.

The method may further include calculating a first summation value of the long and short diameters of the case from the second region image, obtaining a number of charge and discharge cycles of the secondary battery after charging and discharging the secondary battery multiple times so that the secondary battery deteriorates, obtaining a second image of the second region by performing CT imaging on the secondary battery, calculating a second summation value of the long and short diameters of the case from the second image of the second region and determining that the electrode assembly is deformed if a value obtained by subtracting the first summation value from the second summation value is greater than a reference value.

Embodiments include a device for analyzing deformation of a secondary battery having an electrode assembly received in a case. The device includes a control circuit, a processor installed in the control circuit and a memory installed in the control circuit and operably coupled to the processor. The processor executes program code stored in the memory and is configured to obtain a first image by performing computed tomography (CT) imaging on the secondary battery, calculate a first summation values of long and short diameters of the case from the first image, obtain number of charge and discharge cycles of the secondary battery after charging and discharging the secondary battery multiple times so that the secondary battery deteriorates, obtain a second image by performing CT imaging on the secondary battery deteriorated, calculate a second summation value of the long and short diameters of the case from the second image and determining that the electrode assembly is deformed if a value obtained by subtracting the first summation value from the second summation value is greater than a reference value.

The obtaining of the first image may include obtaining a first region image corresponding to a first region and a second region image corresponding to a second region by performing CT imaging on each of the first and second regions of the secondary battery. The processor may execute the program code stored in the memory and may be further configured to calculate a long diameter of the first region of the case from the first region image, calculate a long diameter of the second region of the case from the second region image and determine that the electrode assembly is deformed if an absolute value obtained by subtracting the long diameter of the first region from the long diameter of the second region is greater than a reference value.

The obtaining of the second image may include obtaining a first region image corresponding to a first region and a second region image corresponding to a second region by performing CT imaging on each of the first and second regions of the secondary battery. The processor may execute the program code stored in the memory and may be further configured to calculate a long diameter of the first region of the case from the first region image, calculate a long diameter of the second region of the case from the second region image and determine that the electrode assembly is deformed if an absolute value obtained by subtracting the long diameter of the first region from the long diameter of the second region is greater than a reference value.

The case may have a cylindrical shape.

The electrode assembly may be wound in a cylindrical shape in which a positive electrode plate, a separator and a negative electrode plate are stacked.

The first and second regions may be spaced apart from each other perpendicular to a winding axis of the electrode assembly.

Embodiments include a device for analyzing deformation of a secondary battery having an electrode assembly received in a case. The device includes a control circuit, a processor installed in the control circuit and a memory installed in the control circuit and operably coupled to the processor, wherein the processor may execute a program code stored in the memory and may be configured to obtain a first region image corresponding to a first region and a second region image corresponding to a second region by performing computed tomography (CT) imaging on the first region and second region of the secondary battery, respectively, calculate a long diameter of the first region of the case from the first region image, calculate a long diameter of the second region of the case from the second region image and determining that the electrode assembly is deformed if an absolute value obtained by subtracting the long diameter of the first region from the long diameter of the second region is greater than a reference value.

The processor may execute the program code stored in the memory and may be further configured to calculate a first summation value of the long and short diameters of the case from the first region image, obtain number of charge and discharge cycles of the secondary battery after charging and discharging the secondary battery multiple times so that the secondary battery deteriorates, obtain a second image of the first region by performing CT imaging on the secondary battery, calculate a second summation value of the long and short diameters of the case from the second image of the first region and determine that the electrode assembly is deformed if a value obtained by subtracting the first summation value from the second summation value is greater than a reference value.

The processor may execute the program code stored in the memory and may be further configured to calculate a first summation value of the long and short diameters of the case from the second region image, obtain number of charge and discharge cycles of the secondary battery after charging and discharging the secondary battery multiple times so that the secondary battery deteriorates, obtain a second image of the second region by performing CT imaging on the secondary battery, calculate a second summation value of the long and short diameters of the case from the second image of the second region and determine that the electrode assembly is deformed if a value obtained by subtracting the first summation value from the second summation value is greater than a reference value.

At least some of the above and other features of the invention are set out in the claims.

### BRIEF DESCRIPTION OF DRAWINGS

Features will become apparent to those of ordinary skill in the art by describing in detail example embodiments with reference to the attached drawings, in which:
FIG. 1 is a block diagram showing the configuration of an example deformation analysis device for a secondary battery according to one or more embodiments of the present disclosure.
FIGS. 2A and 2B are flowcharts showing a method for analyzing deformation of an example secondary battery according to one or more embodiments of the present disclosure.
FIGS. 3A and 3B are longitudinal and cross-sectional views of an example secondary battery according to one or more embodiments of the present disclosure.
FIG. 4A is a graph showing the degree of expansion (unit: mm) of a secondary battery relative to the number of charge/discharge cycles of the example secondary battery.
FIG. 4B is a graph showing the difference in long diameter (unit: mm) of the upper and lower ends of the secondary battery compared to the number of charge and discharge cycles of the example secondary battery according to one or more embodiments of the present disclosure.
FIGS. 5A and 5B are graphs showing the degree of expansion (unit: %) of the secondary battery compared to the number of charge/discharge cycles of the example secondary battery according to one or more embodiments of the present disclosure.

### DETAILED DESCRIPTION

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

In addition, a control unit (controller) and/or other related devices or components, according to the present disclosure, may be implemented by using any suitable hardware, firmware (e.g., application specific semiconductor), software, or a suitable combination of software, firmware, and hardware. For example, the control unit (controller) and/or other related devices or components, according to the present disclosure, may be formed on a single integrated circuit chip, or separate integrated circuit chips. In addition, various components of the control unit (controller) may be implemented on a flexible printed circuit film, and may be formed on a substrate identical to a tape carrier package, a printed circuit board, or a control unit (controller). In addition, various components of the control unit (controller) may be a process or thread, running on one or more processors, in one or more computing devices, executing computer program instructions and interacting with other system components for performing the various functionalities described below. The computer program instructions may be stored in a memory which may be implemented in a computing device using a standard memory device, such as, for example, a random access memory (RAM). The computer program instructions may also be stored in other non-transitory computer readable media such as, for example, a CD-ROM, flash drive, or the like. In addition, a person of ordinary skill in the art should recognize that the functionality of various computing devices may be combined or integrated into a single computing device, or the functionality of a particular computing device may be distributed across one or more other computing devices without departing from the scope of the example embodiments of the present disclosure.

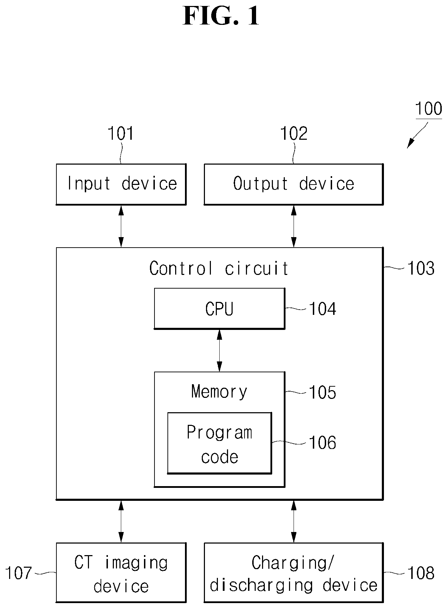

FIG. 1 is a block diagram showing the configuration of an example deformation analysis device 100 for a secondary battery according to one or more embodiments of the present disclosure. As shown in FIG. 1, the deformation analysis device 100 for a secondary battery according to one or more embodiments of the present disclosure may include an input device 101, an output device 102, a control circuit 103, a central processing unit (CPU) 104, a memory 105 and a program code 106. In some embodiments, the deformation analysis device 100 may further include a CT imaging device 107 and/or a charging/discharging device 108.

The control circuit 103 may execute the program code 106 stored in the memory 105 through the CPU 104 and may control the overall operation of the deformation analysis device 100. In some embodiments, the program code 106 may include an image analysis tool, for example, "ImageJ," which is open source software for image analysis that is available to download online.

The deformation analysis device 100 may receive data or information input by a user through the input device 101, for example, a keyboard or mouse, and output images or sounds through the output device 102 such as a monitor or speaker. In some embodiments, the deformation analysis device 100 may receive a CT image directly or indirectly from the CT imaging device 107. In one or more embodiments, the deformation analysis device 100 may receive the number of charge/discharge cycles directly or indirectly from charging/discharging device 108. In some embodiments, the deformation analysis device 100 may receive data paired with the CT image and the number of charge/discharge cycles.

In the memory 105, various settings (e.g., reference values or reference ratios) for implementing embodiments of the present disclosure, received CT images, received charge/discharge cycle numbers and program code 106 for controlling the operation of the deformation analysis device 100, may be stored.

The CT imaging device 107 may obtain a CT image by performing CT imaging on the secondary battery and transmit the same directly or indirectly to the deformation analysis device 100. In some embodiments, the CT imaging device 107 may be controlled by direct control of the control circuit 103, so that the control circuit 103 may obtain or receive images directly from the CT imaging device 107. In embodiment(s), an image obtained from the CT imaging device 107 may be indirectly provided to the control circuit 103 through the input device 101.

The charging/discharging device 108 may charge a secondary battery that is to be subject to CT imaging by providing current and voltage to the secondary battery, or may discharge the secondary battery by connecting a load to the secondary battery. In some embodiments, the charging/discharging device 108 may be controlled by direct control of the control circuit 103, so that the control circuit 103 can obtain or receive the number of charge/discharge cycles directly from the charging/discharging device 108. In one or more embodiments, the number of charge/discharge cycles obtained from the charging/discharging device 108 may be indirectly provided to the control circuit 103 through the input device 101.

In some embodiments, CT images for each number of charge/discharge cycles of the secondary battery may be provided to the control circuit 103 in the form of mutually matched data. In other words, whenever a charge/discharge cycle of the secondary battery elapses, CT imaging may be performed on the secondary battery, and thus data including the number of charge/discharge cycles and the CT images may be directly or indirectly provided to the control circuit 103.

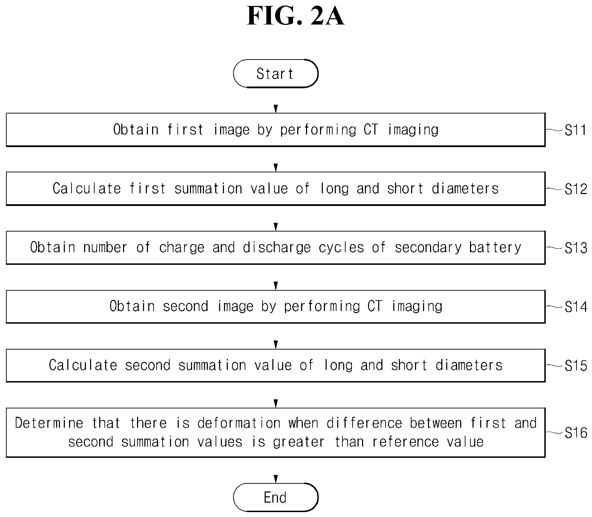

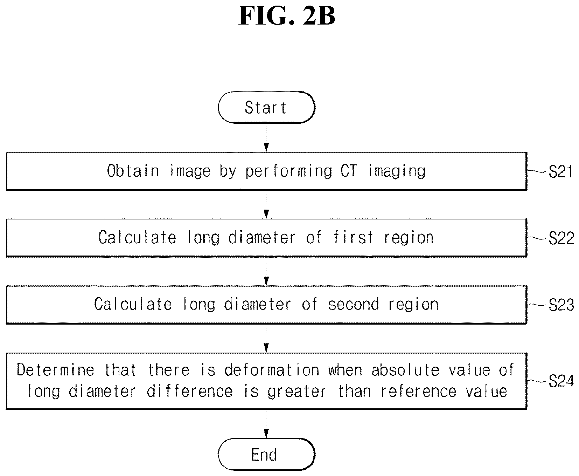

FIGS. 2A and 2B are flowcharts showing a method for analyzing deformation of an example secondary battery according to one or more embodiments of the present disclosure.

As shown in FIG. 2A, the method for analyzing deformation of an example secondary battery according to embodiment(s) of the present disclosure may include obtaining a first image by performing CT imaging on the secondary battery (S11), which may be the first step, calculating a first summation value of the long and short diameters of the case (S12), which may be the second step, obtaining the number of charge and discharge cycles of the secondary battery (S 13), which may be the third step, obtaining a second image by performing CT imaging on the secondary battery (S14), which may be the fourth step, calculating a second summation value of the long and short diameters of the case (S15), which may be the fifth step, and determining that the secondary battery is deformed if a difference between the first summation value and the second summation value is greater than a reference value (S16), which may be the sixth step.

In some embodiments, the long diameter may be referred to as the major axis and the short diameter may be referred to as the minor axis. In geometry, the major and minor axes of a deformed or distorted circle can represent the two perpendicular diameters of an ellipse. An ellipse is a closed curve in which the sum of the distances from one point on the curve to two fixed points (called foci) remains constant. The longer diameter of an ellipse may be referred to as the major axis, and the shorter diameter may be referred to as the minor axis. That is, the major axis is the longest diameter of the ellipse, which passes through the center and both foci, and the length of which may be the long diameter. In addition, the minor axis may be a short diameter perpendicular to the major axis, which passes through the center like the major axis, and the length of which may be the minor axis diameter.

In general, in a perfectly symmetrical circle, the major and minor axes can be the same because no matter which direction the distance is measured across the center, the distance always remains the same. However, in a modified cylindrical case (assuming an elliptical case) described in the present disclosure, the lengths of the major and minor axes may differ because the shape thereof is stretched or compressed. Thus, in the present disclosure, the term "long diameter" may refer to the longer diameter of an ellipse, corresponding to the major axis, and the term "short diameter" may refer to the shorter diameter corresponding to the minor axis.

In step (S1 1), the control circuit 103 may obtain or receive the first image from the CT imaging device 107. In some embodiments, the secondary battery may be subjected to CT imaging by the CT imaging device 107 and the photographed first image may be transmitted from the CT imaging device 107 to the control circuit 103. As described above, the CT imaging device 107 may operate in response to a control signal from the control circuit 103, or may operate independently to transmit the first image to the control circuit 103 directly or indirectly.

In step (S12), the control circuit 103 may measure the long and short diameters of the case from the first image and calculate a first summation value of the long and short diameters. In some embodiments, the long diameter refers to the longest diameter among the diameters of the case, the short diameter refers to the shortest diameter among the diameters of the case and the long diameter and the short diameter may intersect with each other. In addition, the long and short diameters obtained from the first image may be defined or referred to as the initial long diameter of the case and the initial short diameter of the case.

In step (S13), the control circuit 103 may obtain or receive the number of charge and discharge cycles of the secondary battery from the charging/discharging device 108. In one or more embodiments, the secondary battery may be charged and discharged multiple times by the charging/discharging device 108, and the number of cycles after charging and discharging may be transmitted from the charging/discharging device 108 to the control circuit 103. As described above, the charging/discharging device 108 may operate by a control signal from the control circuit 103 or may operate independently to charge and discharge the secondary battery multiple times and may directly or indirectly transmit the number of charge/discharge cycles to the control circuit 103. In some embodiments, the secondary battery may deteriorate or age due to charging and discharging of the secondary battery and deformation may occur to the case and/or the electrode assembly of the secondary battery.

In step (S14), the control circuit 103 may obtain or receive a second image from the CT imaging device 107. In one or more embodiments, the secondary battery may be subject to CT imaging by the CT imaging device 107 and the photographed second image may be transmitted from the CT imaging device 107 to the control circuit 103. As described above, the CT imaging device 107 may operate by a control signal from the control circuit 103 or may operate independently to transmit the second image to the control circuit 103 directly or indirectly.

In step (S15), the control circuit 103 may measure the long and short diameters of the case from the second image and may calculate a second summation value of the long and short diameters. In embodiment(s), the long and short diameters obtained from the second image may be defined or referred to as a case-long diameter by lifespan and a case-short diameter by lifespan. In other words, the long diameter and short diameter obtained from the second image may be interpreted as the case-long diameter by cycle and the case-short diameter by cycle, respectively.

In step (S 16), the control circuit 103 may determine that deformation has occurred internally (e.g., the case and/or the electrode assembly) if a difference between the first summation value and the second summation value (e.g., a value obtained by subtracting the first summation value from the second summation value) is greater than a preset reference value. In some embodiments, the control circuit 103 may output the first and second images, the first and second summation values, the difference between the first and second summation values, the reference value and occurrence of deformation through the output device 102.

Shown in FIG. 2B is an example deformation analysis method for a secondary battery, according to one or more embodiments of the present disclosure. The deformation analysis method may include obtaining an image by performing CT imaging on the secondary battery (S21), which may be the first step, calculating the long diameter of the first region of the case (S22), which may be the second step, calculating the long diameter of the second region of the case (S23), which may be the third step, and determining that the secondary battery is deformed if the absolute value of the difference between the long diameters of the case is greater than a reference value (S24), which may be the fourth step.

In step (S21), the control circuit 103 may obtain or receive a first region image corresponding to the first region of the secondary battery and a second region image corresponding to the second region of the secondary battery, from the CT imaging device 107. In some embodiments, the first region of the secondary battery may be an upper region of the secondary battery and the second region of the secondary battery may be a lower region of the secondary battery.

In step (S22), the control circuit 103 may measure and calculate the long diameter of the first region of the case from the first region image.

In step (S23), the control circuit 103 may measure and calculate the long diameter of the second region of the case from the second region image.

In step (S24), the control circuit 103 may determine that the case and/or the electrode assembly of the secondary battery is deformed if the absolute value of the difference between the long diameters of the case is greater than the reference value. In one or more embodiments, the control circuit 103 may output the first and second region images, the long diameter of the first region, the long diameter of the second region, the difference (e.g., the absolute value) between the long diameter of the first region and the long diameter of the second region, the reference value and occurrence of deformation through the output device 102.

Various embodiments of deformation analysis methods of secondary batteries according to the present disclosure are explained below.

### [Preparation of secondary battery]

A cylindrical secondary battery having a jelly-roll shaped electrode assembly received in a cylindrical case (or cylindrical can) may first be prepared.

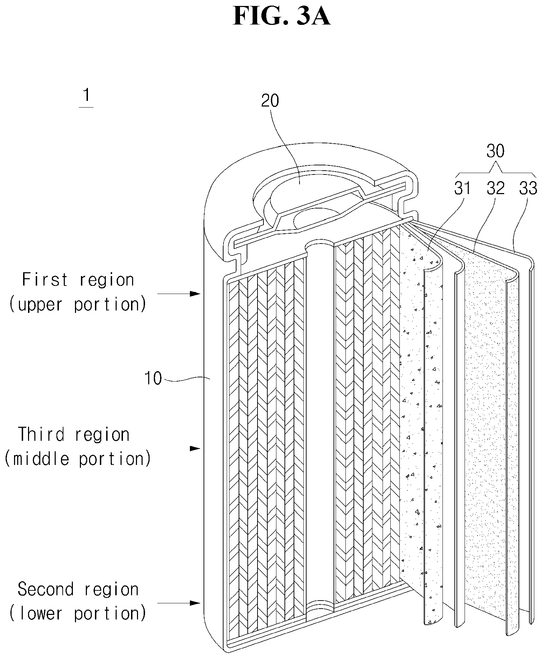

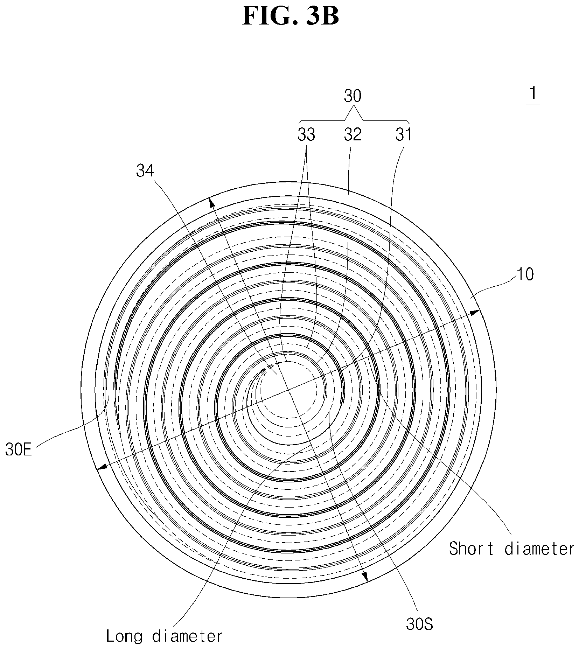

FIGS. 3A and 3B are longitudinal and cross-sectional views of an example secondary battery. FIG. 3B is significantly exaggerated to illustrate a wound state of an electrode assembly. In actuality, the center of the electrode assembly has an empty space (or core) that is approximately circular, and there is almost no empty space between the outside of the electrode assembly and the inner surface of the case (or can). In practice, the electrode assembly is wound to approximate a perfect circle, and in FIG. 3B is shown in exaggeration to illustrate the winding structure as described above. In addition, a person of ordinary skill in the art will understand that the CT image corresponding to FIG. 3B is the opposite of the shading in FIG. 3B.

In one or more embodiments, the jelly-roll shaped electrode assembly 30 of the secondary battery 1 may be received in the cylindrical case 10, and, after an electrolyte is injected so that the electrode assembly 30 is immersed in the cylindrical case 10 (optional), may be manufactured by coupling the cap assembly 20 to an open top end of the cylindrical case 10. In some embodiments, the electrode assembly 30 may be in the form of a jelly-roll manufactured by stacking a positive electrode plate 31 and a negative electrode plate 32 in a state in which a separator 33 is interposed therebetween and then winding in one direction. In FIG. 3B, 30S refers to the winding tip region of the electrode assembly 30 where winding begins, and 30E refers to the winding end portion of the electrode assembly 30 where winding ends. In embodiment(s), the electrode assembly 30 may be in the form of a jelly-roll manufactured by stacking the positive electrode plate 31 and the negative electrode plate 32 with a separator 33 interposed therebetween and then winding it in one direction. In FIG. 3B, 30S refers to a winding leading end portion of the electrode assembly 30 where winding begins and 30E refers to a winding trailing end portion of the electrode assembly 30 where winding ends. In some embodiments, the phrases "winding leading end portion" and "winding trailing end portion" may refer to specific regions during the manufacturing process of an electrode assembly. This process may involve the generation of wound or rolled electrode structures commonly used in batteries, for example, lithium-ion cells. Specifically, in a circular electrode assembly of a secondary battery, the winding leading end portion may refer to an initial section or point where winding of the electrode plate begins. This may be a place where a first layer of an electrode plate is attached to or wrapped around a central core or a separator. In the circular electrode assembly of a secondary battery, the winding trailing end portion may refer to the last section or point where the winding process ends. This may be a place where the last layer of the electrode plate is attached and secured. In order to ensure that the electrode plate is securely fastened and has no loose ends or edges, it is important to properly terminate the winding process at the winding trailing end portion. Since the contents regarding the positive electrode plate, the negative electrode plate, the separator, and the electrolyte, are known to a person skilled in the art, detailed descriptions thereof will be omitted.

In some embodiments, the cylindrical case 10 may be made of metal, for example, steel, stainless steel, or nickel-plated steel. In one or more embodiments, a cylindrical case may include a receiving part in which an electrode assembly may be received, and the upper portion may be open. In embodiment(s), the cylindrical case 10 may be made of metal such as steel, stainless steel, or nickel-plated steel. In some embodiments, the cylindrical case 110 may include a receiving part in which an electrode assembly may be received, and the upper portion may be open. In one or more embodiments, the cylindrical case may include a receiving part in which an electrode assembly can be received, and the upper portion thereof may be opened. In some embodiments, a beading part that is bent may be provided to be sealed after the cap assembly 20 is coupled to the opened upper portion of the cylindrical case 10, and to secure the cap assembly 20, the upper end may be bent to provide a crimping part. In one or more embodiments, the beading part may be provided at a portion where the cap assembly and the cylindrical case contact each other, and may be indented toward the inside of the cylindrical case. In some embodiments, the cylindrical case may serve as a negative electrode terminal for connection to an external circuit. In embodiment(s), the cap assembly 20 may be constructed such that a cap-up and a safety vent are in close contact with an airtight gasket installed in a space formed on the inner surfaces of the crimping part and the beading part of the cylindrical case 10. The central portion of the cap-up may protrude upward, and thus may serve as a positive electrode terminal for connection to an external circuit. In one or more embodiments, a core 34 in the form of an empty space may be provided at the center of the electrode assembly 30 wound in a jelly-roll configuration. In some embodiments, a center pin (not shown) made of a cylindrical metal material may be inserted into the core 34 to offer extra strength to the electrode assembly, and in some cases, after the electrode assembly is welded to the cylindrical case or cap assembly, the center pin may be removed. In embodiment(s), a negative electrode tab may protrude from the lower end of the electrode assembly and be welded to the bottom surface of the cylindrical case, and a positive electrode tab may protrude from the upper end of the electrode assembly and be welded to the cap assembly.

In one or more embodiments, the region of the secondary battery 1 subjected to CT imaging may include a first region adjacent to the cap assembly and/or a second region adjacent to the bottom surface of the can. In other words, the first region may be approximately an upper portion of the can and electrode assembly, and the second region may be approximately a lower portion of the can and electrode assembly. In some embodiments, the region subjected to CT imaging may further include a third region, which may be approximately a middle portion of the can and electrode assembly.

In embodiment(s), the present disclosure may also apply to the 18650 (18 mm in diameter, 65 mm in height) cylindrical battery, the 21700 (21 mm in diameter, 70 mm in height) cylindrical battery, or the 46800 (46 mm in diameter, 80 mm in height) cylindrical battery, and may also apply to cylindrical batteries that will be manufactured in the future.

### [First CT imaging]

When the cylindrical secondary battery is prepared in the above-described manner, a first image of a cross-section perpendicular to the winding axis of the electrode assembly may be obtained by a CT imaging device. In some embodiments, the first image may be a first region image obtained by photographing the first region of the secondary battery (e.g., an upper portion of the case and electrode assembly). In one or more embodiments, the first image may be a second region image obtained by photographing the second region of the secondary battery (e.g., a lower portion of the case and electrode assembly). In embodiment(s), the first image may be a third region image obtained by photographing the third region of the secondary battery (e.g., the middle portion of the case and electrode assembly).

In some embodiments, the CT imaging device 107 may include a jig on which the secondary battery is mounted, an X-ray irradiator that irradiates X-rays to the secondary battery and an X-ray detector that detects X-rays transmitted through the secondary battery. The first, second, and third region images obtained from the CT imaging device may be transmitted directly or indirectly to the control circuit 103 of the deformation analysis device 100 of the secondary battery, and a computer or processor may obtain the first, second, and third region images corresponding to the first, second, and third regions of the secondary battery from transmitted X-rays and then store the same.

In one or more embodiments, the CT imaging device 107 may obtain only the first region image corresponding to the first region of the secondary battery, obtain only the second region image corresponding to the second region, or obtain only the third region image corresponding to the third region. In some embodiments, the CT imaging device 107 may obtain only the first and second region images of the secondary battery, only the first and third region images, or only the second and third region images.

### [Calculation of first summation value]

In embodiment(s), the control circuit 103 may measure the long and short diameters of the case from the first region image and calculate the first summation value of the long and short diameters. In some embodiments, the control circuit 103 may measure the long and short diameters of the case from the second region image and calculate the first summation value of the long and short diameters. In one or more embodiments, the control circuit 103 may measure the long and short diameters of the case from the third region image and calculate the first summation value of the long and short diameters.

### [Proceeding of charge/discharge cycles of secondary battery]

The secondary battery may be charged and discharged through the charging/discharging device 108. When the secondary battery is charged and discharged once, it may be defined that one cycle or one lifespan of the secondary battery has elapsed. In some embodiments, images may be obtained from the CT imaging device every time approximately 50 to approximately 100 cycles of the secondary battery elapse by the charge/discharge device.

The charging/discharging device 108 may include a jig on which the secondary battery is mounted, a charging circuit connected to the secondary battery to provide charging power, a discharging circuit connected to the secondary battery and operating as a load, positive and negative electrode pins respectively connecting the charge circuit or the discharge circuit to positive and negative electrode terminals of the secondary battery, and a computer or processor capable of storing the charge/discharge time, charge/discharge voltage, charge/discharge current, and number of cycles. The number of cycles obtained from the charge/discharge device may be transmitted directly or indirectly to the control circuit 103 of the deformation analysis device 100 of the secondary battery. In some embodiments, without the intervention of the charging/discharging device 108, if the image obtained from the CT imaging device 107 is transmitted to the control circuit 103, the number of cycles may also be manually input through the input device.

### [Second CT imaging]

As described above, after the secondary battery deteriorates as the charge and discharge cycles of the secondary battery progress, a second image of a cross-section perpendicular to the winding axis of the electrode assembly may be obtained by a CT imaging device. In one or more embodiments, the second image may be a first region image obtained by photographing the first region of the secondary battery (e.g., an upper portion of the case and electrode assembly). In some embodiments, the second image may be a second region image obtained by photographing the second region of the secondary battery (e.g., a lower portion of the case and electrode assembly). In embodiment(s), the second image may be a third region image obtained by photographing the third region of the secondary battery (e.g., the middle region of the case and electrode assembly). The images obtained from the CT imaging device may be transmitted directly or indirectly to the control circuit 103 of the deformation analysis device 100 of the secondary battery.

### [Calculation of second summation value]

In some embodiments, the control circuit 103 may measure the long and short diameters of the case from the first region image and calculate the second summation value of the long and short diameters. In one or more embodiments, the control circuit 103 may measure the long and short diameters of the case from the second region image and calculate the second summation value of the long and short diameters. In embodiment(s), the control circuit 103 may measure the long and short diameters of the case from the third region image and calculate the second summation value of the long and short diameters.

[Determination of deformation of secondary battery]

In the present disclosure, determination of deformation of a secondary battery may be performed in various ways.
[1. Deformation determination using degree of expansion (unit: mm)]
   (1) In some embodiments, if a difference between the first summation value and the second summation value (e.g., a value obtained by subtracting the first summation value from the second summation value) is greater than a preset reference value, the inside of the secondary battery (e.g., the case or the electrode assembly) may be determined to be deformed. In one or more embodiments, if the first and second images are obtained, the number of charge and discharge cycles may also be obtained. Accordingly, it may be determined whether the secondary battery is deformed as the number of cycles of the secondary battery elapses. In some embodiments, the first and second images may be obtained from the same region (e.g., one of the first, second, and third regions) of the secondary battery, and the first and second summation values may also be calculated in the same region of the secondary battery.
   (2) In one or more embodiments, instead of including the step of calculating the first and second summation values, the initial long diameter of the case may be calculated from the first image, and the case-long diameter by lifespan or cycle may be calculated from the second image. Thereafter, if the value obtained by subtracting the initial long diameter of the first image from the long diameter of the second image by lifespan is greater than the reference value, it may be determined that the inside of the secondary battery is deformed. In some embodiments, the first and second images may be obtained from the same region (e.g., one of the first, second, and third regions) of the secondary battery and the initial long diameter and the long diameter by lifespan may also be measured in the same region of the secondary battery.
   (3) In embodiment(s), instead of including the step of calculating the first and second summation values, the initial short diameter of the case may be calculated from the first image and the short diameter of the case by lifespan or cycle may be calculated from the second image. Thereafter, if the value obtained by subtracting the initial short diameter of the second image from the short diameter of the second image by lifespan is greater than the reference value, it may be determined that the inside of the secondary battery is deformed. In some embodiments, the first and second images may be obtained from the same region (e.g., one of the first, second, and third regions) of the secondary battery and the initial short diameter and the short diameter by lifespan may also be measured in the same region of the secondary battery.
[2. Deformation determination using degree of expansion (unit: %)]
   (1) In one or more embodiments, instead of including the step of calculating the first and second summation values, the initial long diameter of the case may be calculated from the first image and the long diameter of the case by lifespan or cycle may be calculated from the second image. Thereafter, if the ratio of the initial long diameter of the first image to the long diameter of the second image by lifespan (e.g., (long diameter of second image by lifespan/initial long diameter of first image) × 100%) is greater than a reference value, it may be determined that the inside of the secondary battery is deformed. In some embodiments, the first and second images may be obtained from the same region (e.g., one of the first, second, and third regions) of the secondary battery and the initial long diameter and the long diameter by lifespan may also be measured in the same region of the secondary battery.
   (2) In embodiment(s), instead of including the step of calculating the first and second summation values, the initial short diameter of the case may be calculated from the first image and the short diameter of the case by lifespan or cycle may be calculated from the second image. Thereafter, if the ratio of the initial short diameter of the first image to the short diameter of the second image by lifespan (e.g., (short diameter of second image by lifespan/initial short diameter of first image) × 100%) is greater than the reference value, it may be determined that the inside of the secondary battery is deformed. In some embodiments, the first and second images may be obtained from the same region (e.g., one of the first, second, and third regions) of the secondary battery and the initial short diameter and the short diameter by lifespan may also be measured in the same region of the secondary battery.
   (3) In one or more embodiments, instead of including the step of subtracting the first summation value from the second summation value, if the ratio of the first summation value to the second summation value (e.g., (second summation value by lifespan/initial first summation value) × 100%) is greater than a preset reference ratio, it may be determined that the inside of the secondary battery is deformed.
   (4) In some embodiments, instead of including the step of calculating the first and second summation values, if the ratio of the short diameter of the second image by lifespan to the long diameter of the second image by lifespan (e.g., (short diameter of second image by lifespan/long diameter of the second image by lifespan)* 100%) is greater than a preset reference ratio, it may be determined that the inside of the secondary battery is deformed.
   (5) In embodiment(s), instead of including the step of calculating the first and second summation values, if the ratio of the initial short diameter of the first image to the initial long diameter of the first image (e.g., (initial short diameter of first image/initial long diameter of first image)* 100%) is greater than a preset reference ratio, it may be determined that the inside of the secondary battery is deformed.
[3. Deformation determination using degree of expansion by cell height (upper/middle/lower portions) (unit: %) ]
   (1) In some embodiments, if the ratio of the degree of expansion for the first region to the degree of expansion for the third region (e.g., degree of expansion of upper portion/degree of expansion of middle portion) is greater than a preset reference ratio, it may be determined that the interior of the secondary battery is deformed. In some embodiments, the degree of expansion may be obtained from the aforementioned item "2. Deformation determination using degree of expansion (unit: %).
   (2) In one or more embodiments, if the ratio of the degree of expansion for the third region to the degree of expansion for the second region (e.g., degree of expansion of middle portion/degree of expansion of lower portion) is greater than a preset reference ratio, it may be determined that the interior of the secondary battery is deformed. In some embodiments, the degree of expansion may be obtained from the aforementioned item "2. Deformation determination using degree of expansion (unit: %)."
   (3) In embodiment(s), if the ratio of the degree of expansion for the first region to the degree of expansion for the second region (e.g., degree of expansion of upper portion/degree of expansion of lower portion) is greater than a preset reference ratio, it may be determined that the interior of the secondary battery is deformed. In some embodiments, the degree of expansion may be obtained from the aforementioned item "2. Deformation determination using degree of expansion (unit: %)."
[4. Deformation determination method using long diameter difference by cell height (upper/middle/lower portions) (unit: mm)]
   (1) In some embodiments, if a difference between the long diameter of the first region to the long diameter of the second region (e.g., long diameter of upper portion - long diameter of lower portion) is greater than a preset reference value, it may be determined that the inside of the secondary battery is deformed. This determination method may be similar or identical to the method described with reference to FIG. 2B and the description corresponding thereto.
   (2) In one or more embodiments, if a difference between the long diameter of the first region to the long diameter of the third region (e.g., long diameter of upper portion - long diameter of middle portion) is greater than a preset reference value, it may be determined that the inside of the secondary battery is deformed. This determination method may be similar or identical to the method described with reference to FIG. 2B and the description corresponding thereto.
   (3) In some embodiments, if a difference between the long diameter of the third region to the long diameter of the second region (e.g., long diameter of middle portion - long diameter of lower portion) is greater than a preset reference value, it may be determined that the inside of the secondary battery is deformed. This determination method may be similar or identical to the method described with reference to FIG. 2B and the description corresponding thereto.
[5. Deformation determination method using short diameter difference by cell height (upper/middle/lower portions) (unit: mm)]
   (1) In one or more embodiments, if a difference between the short diameter of the first region to the short diameter of the second region (e.g., short diameter of upper portion - short diameter of lower portion) is greater than a preset reference value, it may be determined that the inside of the secondary battery is deformed. This determination method may be similar or identical to the method described with reference to FIG. 2B and the description corresponding thereto.
   (2) In some embodiments, if a difference between the short diameter of the first region to the short diameter of the third region (e.g., short diameter of upper portion - short diameter of middle portion) is greater than a preset reference value, it may be determined that the inside of the secondary battery is deformed. This determination method may be similar or identical to the method described with reference to FIG. 2B and the description corresponding thereto.
   (3) In embodiment(s), if a difference between the short diameter of the third region to the short diameter of the second region (e.g., short diameter of middle portion - short diameter of lower portion) is greater than a preset reference value, it may be determined that the inside of the secondary battery is deformed. This determination method may be similar or identical to the method described with reference to FIG. 2B and the description corresponding thereto.

The reference value or reference ratio may vary depending on the electrochemical characteristics, size, usage environment, etc. of the secondary battery.

In general, if there is no deformation in the electrode assembly, there will be no change in the long diameter and/or short diameter of the case despite an increase in the number of charge and discharge cycles of the secondary battery. However, as the number of charge/discharge cycles of the secondary battery increases, the electrode assembly repeats expansion and contraction, and thus the electrode assembly may be deformed. Taking this into consideration, in the present disclosure, the change value or change rate of the long diameter and/or short diameter of the case may be measured as the number of charge and discharge cycles of the secondary battery increases, and if the change value or change rate is greater than a predetermined reference value or reference rate, it may be determined that the case and/or the electrode assembly is deformed.

In addition, even in cases where the number of charge/discharge cycles of the secondary battery is not considered, if there is no deformation in the electrode assembly, the long diameter and/or short diameter between the upper portion, lower portion, and/or middle portion of the case will be the same or similar. However, if there is internal deformation in the secondary battery, there will be a difference in the long diameter and/or short diameter between the upper portion, the lower portion, and/or the middle portion of the case. Taking this into consideration, in the present disclosure, in a state in which the number of charge/discharge cycles of the secondary battery is not considered, if a difference (e.g., the absolute value) of the long diameters and/or the short diameters between the upper portion, lower portion and/or the middle portion of the case is greater than a reference value, it may be determined that the case and/or the electrode assembly is deformed.

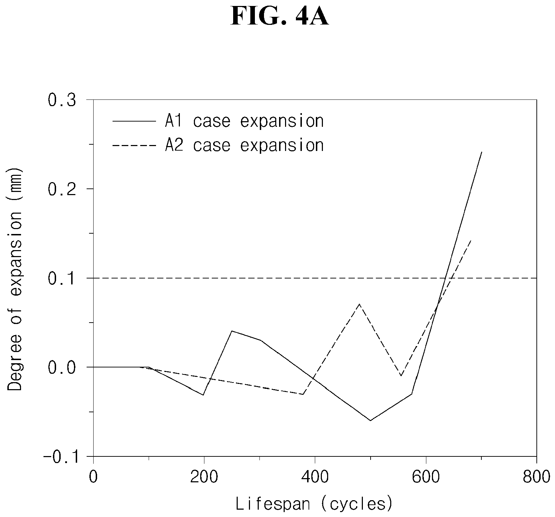

FIG. 4A is a graph showing the degree of expansion (unit: mm) of a secondary battery relative to the number of charge/discharge cycles of the example secondary battery, according to one or more embodiments. In FIG. 4A, the X-axis indicates the number of charge/discharge cycles, the Y-axis indicates the degree of expansion (mm), A1 represents a first secondary battery and A2 represents a second secondary battery. In addition, the degree of expansion (mm) may mean a long diameter difference.

As shown in FIG. 4A, it can be seen that the degrees of expansion (long diameter differences) of the first and second secondary batteries generally increase as the number of charge and discharge cycles increases. In some embodiments, if the degree of expansion is greater than approximately 0.1 mm, the secondary batteries may be determined to be deformed.

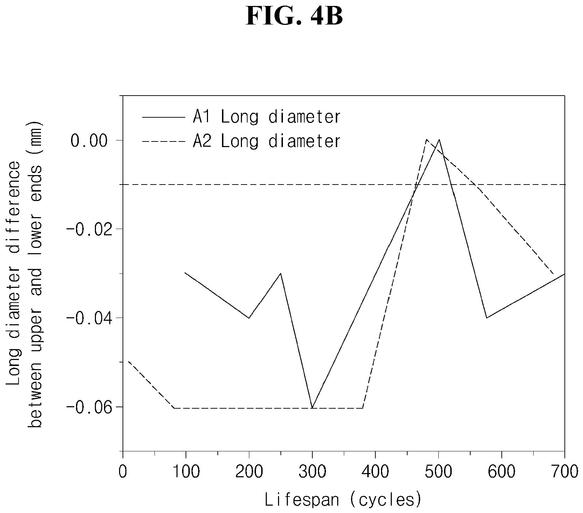

FIG. 4B is a graph showing the difference in long diameter (unit: mm) of the upper and lower ends of the secondary battery compared to the number of charge and discharge cycles of the example secondary battery according to one or more embodiments. In FIG. 4B, the X-axis indicates the number of charge/discharge cycles, the Y-axis indicates the long diameter difference between upper and lower ends (mm), A1 represents a first secondary battery and A2 represents a second secondary battery.

As shown in FIG. 4B, it can be seen that the long diameter difference between upper and lower ends generally increases as the number of charge and discharge cycles increases. In some embodiments, if the long diameter difference is greater than approximately -0.01 mm, the secondary batteries may be determined to be deformed.

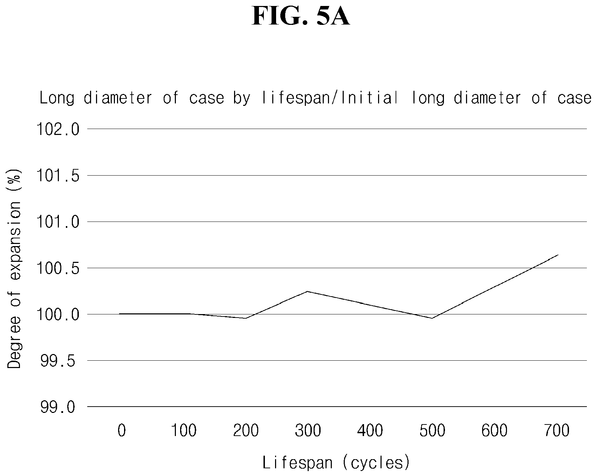

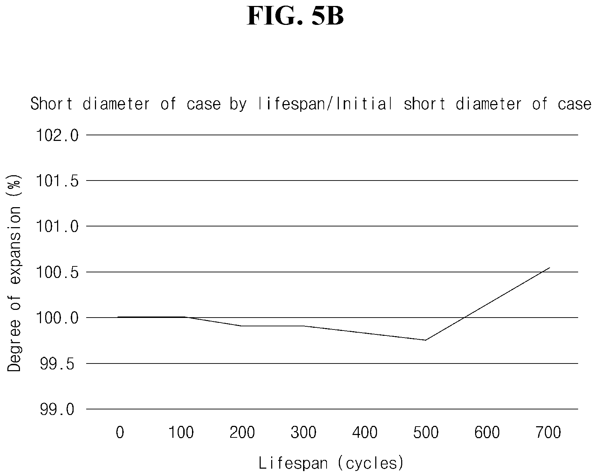

FIGS. 5A and 5B are graphs showing the degree of expansion (unit: %) of the secondary battery compared to the number of charge/discharge cycles of the example secondary battery. In FIGS. 5A and 5B, the X-axis indicates the number of charge/discharge cycles and the Y-axis indicates the degree of expansion (%).

As shown in FIGS. 5A and 5B, referring to the ratio of the long diameter of the case by lifespan to the initial long diameter of the case, and the ratio of the short diameter of the case by lifespan to the initial short diameter of the case, it can be seen that the degree of expansion gradually increases as the number of charge and discharge cycles increases. In some embodiments, if the degree of expansion is greater than approximately 100.5%, the secondary battery may be determined to be deformed.

As described above, in the deformation analysis device for a secondary battery and a method thereof, according to the embodiments of the present disclosure, the images concerning the long diameter and/or short diameter of the case in a direction perpendicular to the winding axis of the electrode assembly may be obtained, and it may be determined whether the case and/or the electrode assembly is deformed from the difference of the long diameter and/or short diameter from the images. Thus, according to embodiments of the present disclosure, it is possible to accurately determine whether or not a case and/or an electrode assembly provided in a secondary battery is deformed in a non-destructive manner without disassembling the secondary battery.

As described above, the present disclosure provides a deformation analysis device for a secondary battery and a method thereof, by which internal deformation of the secondary battery can be accurately diagnosed by using CT (computed tomography) images, a non-destructive analysis method.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A method for analyzing deformation of a secondary battery having an electrode assembly received in a case, the deformation analysis method comprising:
obtaining a first image by performing computed tomography (CT) imaging on the secondary battery;
calculating a first summation value of long and short diameters of the case from the first image;
obtaining a number of charge and discharge cycles of the secondary battery after charging and discharging the secondary battery multiple times so that the secondary battery deteriorates;
obtaining a second image by performing CT imaging on the deteriorated secondary battery;
calculating a second summation value of the long and short diameters of the case from the second image; and
determining that the electrode assembly is deformed if a value obtained by subtracting the first summation value from the second summation value is greater than a reference value.

2. The method as claimed in claim 1, wherein the obtaining the first image further includes:
obtaining a first region image corresponding to a first region and a second region image corresponding to a second region by performing CT imaging on each of the first and second regions of the secondary battery;
calculating a long diameter of the first region of the case from the first region image;
calculating a long diameter of the second region of the case from the second region image; and
determining that the electrode assembly is deformed if an absolute value obtained by subtracting the long diameter of the first region from the long diameter of the second region is greater than a reference value.

3. The method as claimed in claim 1 or 2, wherein the obtaining the second image further includes:
obtaining a first region image corresponding to a first region and a second region image corresponding to a second region by performing CT imaging on each of the first and second regions of the secondary battery;
calculating a long diameter of the first region of the case from the first region image;
calculating a long diameter of the second region of the case from the second region image; and
determining that the electrode assembly is deformed if an absolute value obtained by subtracting the long diameter of the first region from the long diameter of the second region is greater than a reference value.

4. The method as claimed in claim 1, 2 or 3, wherein the case has a cylindrical shape, and/or
wherein the electrode assembly is wound in a cylindrical shape in which a positive electrode plate, a separator and a negative electrode plate are stacked.

5. The method as claimed in claim 2 or any claim dependent on claim 2, or claim 3 or any claim dependent on claim 3, wherein the first and second regions are spaced apart from each other perpendicular to a winding axis of the electrode assembly.

6. A method for analyzing deformation of a secondary battery having an electrode assembly received in a case, the method comprising:
obtaining a first region image corresponding to a first region and a second region image corresponding to a second region by performing computed tomography (CT) imaging on the first region and the second region of the secondary battery, respectively;
calculating a long diameter of the first region of the case from the first region image;
calculating a long diameter of the second region of the case from the second region image; and
determining that the electrode assembly is deformed if an absolute value obtained by subtracting the long diameter of the first region from the long diameter of the second region is greater than a reference value.

7. The method as claimed in claim 6, further comprising:
calculating a first summation value of the long and short diameters of the case from the first region image;
obtaining a number of charge and discharge cycles of the secondary battery after charging and discharging the secondary battery multiple times so that the secondary battery deteriorates;
obtaining a second image of the first region by performing CT imaging on the secondary battery;
calculating a second summation value of the long and short diameters of the case from the second image of the first region; and
determining that the electrode assembly is deformed if a value obtained by subtracting the first summation value from the second summation value is greater than a reference value.

8. The method as claimed in claim 6 or 7, further comprising:
calculating a first summation value of the long and short diameters of the case from the second region image;
obtaining a number of charge and discharge cycles of the secondary battery after charging and discharging the secondary battery multiple times so that the secondary battery deteriorates;
obtaining a second image of the second region by performing CT imaging on the secondary battery;
calculating a second summation value of the long and short diameters of the case from the second image of the second region; and
determining that the electrode assembly is deformed if a value obtained by subtracting the first summation value from the second summation value is greater than a reference value.

9. A device for analyzing deformation of a secondary battery having an electrode assembly received in a case, the device comprising:
a control circuit;
a processor installed in the control circuit; and
a memory installed in the control circuit and operably coupled to the processor, wherein the processor is configured to execute a program code stored in the memory and is configured to:
obtain a first image by performing computed tomography (CT) imaging on the secondary battery;
calculate a first summation value of long and short diameters of the case from the first image;
obtain number of charge and discharge cycles of the secondary battery after charging and discharging the secondary battery multiple times so that the secondary battery deteriorates;
obtain a second image by performing CT imaging on the deteriorated secondary battery;
calculate a second summation value of the long and short diameters of the case from the second image; and
determine that the electrode assembly is deformed if a value obtained by subtracting the first summation value from the second summation value is greater than a reference value.

10. The device as claimed in claim 9, wherein the obtaining of the first image comprises :
obtain a first region image corresponding to a first region and a second region image corresponding to a second region by performing CT imaging on each of the first and second regions of the secondary battery; and
wherein the processor is configured to execute the program code stored in the memory and is further configured to:
calculate a long diameter of the first region of the case from the first region image;
calculate a long diameter of the second region of the case from the second region image; and
determine that the electrode assembly is deformed if an absolute value obtained by subtracting the long diameter of the first region from the long diameter of the second region is greater than a reference value, and/or
wherein the obtaining of the second image comprises:
obtaining a first region image corresponding to a first region and a second region image corresponding to a second region by performing computed tomography imaging on each of the first and second regions of the deteriorated secondary battery; and
wherein the processor is configured to execute the program code stored in the memory and is further configured to:
calculate a long diameter of the first region of the case from the first region image;
calculate a long diameter of the second region of the case from the second region image; and
determine that the electrode assembly is deformed if an absolute value obtained by subtracting the long diameter of the first region from the long diameter of the second region is greater than a reference value.

11. The device as claimed in claim 9 or 10, wherein the case has a cylindrical shape, and/or
wherein the electrode assembly is wound in a cylindrical shape in which a positive electrode plate, a separator and a negative electrode plate are stacked.

12. The device as claimed in any one of claims 9 to 11, wherein the first and second regions are spaced apart from each other perpendicular to a winding axis of the electrode assembly.

13. A device for analyzing deformation of a secondary battery having an electrode assembly received in a case, the device comprising:
a control circuit;
a processor installed in the control circuit; and
a memory installed in the control circuit and operably coupled to the processor,
wherein the processor is configured to execute a program code stored in the memory and is configured to:
obtain a first region image corresponding to a first region and a second region image corresponding to a second region by performing computed tomography (CT) imaging on the first region and second region of the secondary battery, respectively;
calculate a long diameter of the first region of the case from the first region image;
calculate a long diameter of the second region of the case from the second region image; and
determine that the electrode assembly is deformed if an absolute value obtained by subtracting the long diameter of the first region from the long diameter of the second region is greater than a reference value.

14. The device as claimed in claim 13, wherein the processor is configured to execute the program code stored in the memory and is further configured to:
calculate a first summation value of the long and short diameters of the case from the first region image;
obtain number of charge and discharge cycles of the secondary battery after charging and discharging the secondary battery multiple times so that the secondary battery deteriorates;
obtain a second image of the first region by performing CT imaging on the secondary battery;
calculate a second summation value of the long and short diameters of the case from the second image of the first region; and
determine that the electrode assembly is deformed if a value obtained by subtracting the first summation value from the second summation value is greater than a reference value.

15. The device as claimed in claim 13 or 14, wherein the processor is configured to execute the program code stored in the memory and is further configured to:
calculate a first summation value of the long and short diameters of the case from the second region image;
obtain number of charge and discharge cycles of the secondary battery after charging and discharging the secondary battery multiple times so that the secondary battery deteriorates;
obtain a second image of the second region by performing CT imaging on the secondary battery;
calculate a second summation value of the long and short diameters of the case from the second image of the second region; and
determine that the electrode assembly is deformed if a value obtained by subtracting the first summation value from the second summation value is greater than a reference value.
